# FASCICULE DE BREVET EUROPEEN

(11) **EP 2 463 258 B1**
(45) Date de publication et mention de la délivrance du brevet: **01.03.2017**
(21) Numéro de dépôt: 10015510.0
(22) Date de dépôt: 10.12.2010
(51) Int. Cl.: C05D 3/02, C05G 3/00

(54) **AMENDEMENT ET ENGRAIS À DÉLITAGE DYNAMIQUE, LEUR PROCÉDÉ DE FABRICATION, ET LEURS UTILISATIONS EN AGRICULTURE**
BODENVERBESSERUNGSVERFAHREN UND DÜNGEMITTEL MIT DYNAMISCHER AUFSPALTUNG, IHRE HERSTELLUNG UND EINSATZMÖGLICHKEITEN IN DER LANDWIRTSCHAFT
SOIL IMPROVEMENTS AND FERTILIZERS BY DYNAMIC DISINTEGRATION, THEIR MANUFACTURING METHOD AND THEIR USES IN AGRICULTURE

(43) Date de publication de la demande: 13.06.2012
(73) Titulaire: Omya International AG, 4665 Oftringen (CH)
(72) Inventeur: Gaumont, François-Xavier, 28000 Chartres (FR)
(74) Mandataire: Richebourg, Michel François

(56) Documents cités:
- CA-A1- 1 019 355
- FR-A1- 2 218 932
- GB-A- 2 209 744
- US-A- 4 015 973
- DATABASE WPI Week 201009 Thomson Scientific, London, GB; AN 2009-S52272 XP002637641, & CN 101 595 870 A (SHENZHEN LANGTAI BIOTECHNOLOGY CO LTD) 9 décembre 2009 (2009-12-09)

## Description

### SECTEUR TECHNIQUE

La présente invention concerne le secteur technique des matières fertilisantes, plus particulièrement les amendements et les engrais utiles dans tous les domaines de l'agriculture en général tels que l'agriculture céréalière et fourragère, les grandes cultures, les cultures d'oléagineux, de protéagineux jusque et y compris dans les domaines connexes tels que sylviculture, cultures forestières en général, pépinières, production de légumes et légumineuses, ou tout autres types d'agriculture, y compris les prairies, les cultures de biomasse destinées à la production d'énergie, les cultures de couverts végétaux à des fins environnementales et les usages domestiques ou de loisir sur gazon ou terrain mis en herbe, ci-après dans la totalité de la description et les revendications : « **amendements ».**

Plus particulièrement, la présente invention concerne, mais à titre non limitatif, les amendements et engrais contenant des minéraux, tout particulièrement du carbonate de calcium de tout type et toute origine (naturelle, ou industrielle comme par exemple le PCC ou carbonate de calcium précipité) et tout particulièrement des amendements dits « minéraux basiques ».

Enfin, l'invention concerne spécifiquement la préparation de tels amendements ou engrais sous forme de granulés à fort pouvoir de « colonisation » du sol, c'est-à-dire à fort pouvoir de couverture de la surface du sol.

### ART ANTERIEUR

Les amendements minéraux basiques traditionnels granulés sont en général épandus sur les sols agricoles puis incorporés par un travail du sol. Par rapport à la poudre, ils présentent de gros avantages pour le client : la facilité d'épandage, une moindre sensibilité au vent, une diminution très importante de la poussière émise. Pour le fournisseur, l'étalement des ventes et des livraisons est aussi un avantage substantiel.

Toutefois, le procédé de granulation réduit l'efficacité agronomique de ces amendements. D'une part, en raison d'une moindre couverture du sol par des particules fines (beaucoup moins de points d'impact au mètre carré), et d'autre part en raison du procédé de granulation (par compactage ou autre) et/ou des additifs ajoutés lors de la granulation. Ces derniers favorisent la résistance aux chocs dans les épandeurs, favorisent la répartition au sol des granulés par effet centrifuge et limitent les émissions de poussières lors de la manipulation ou de l'épandage, mais nuisent beaucoup à la dispersion des particules élémentaires qui les constituent, ce qui réduit l'efficacité des amendements granulés.

On connaît bien entendu des granulés d'amendements dans l'art antérieur, mais leur comportement sur le sol (outre d'autres inconvénients liés à la fabrication, au transport, à la manipulation, aux poussières etc...) est celui d'une « fonte gravitaire » c'est-à-dire que le granulé se délite à l'humidité mais s'écroule sur lui-même, ne couvrant qu'un diamètre de 2 - 3 mm.

Comme le carbonate de calcium n'est que très peu soluble dans l'eau, il migre très peu dans le sol. Il faut donc travailler le sol pour bien disperser ce type de granulé, ce qui est une contrainte majeure pour l'utilisateur final, surtout dans les systèmes culturaux où le travail du sol est nécessairement réduit ou impossible (prairies naturelles, vignes, forêts, terrain de golf, ...).

Certains granulés contiennent des sels solubles, notamment de l'azote sous forme « nitrique ». Ils sont très solubles et sont très vite dissous, et enrichissent le sol par diffusion capillaire, sans avoir besoin de couvrir une large surface du sol.

Inversement, on connaît aussi des amendements très peu solubles, qui évidemment n'ont d'effet qu'au point d'impact et ne couvrent qu'une zone qui est de l'ordre de la taille du granulé, disons de l'ordre du mm.

Bien que ces problèmes soient bien connus et depuis longtemps, de façon surprenante, l'industrie et les utilisateurs concernés se sont contentés des produits actuels et à la connaissance du Demandeur, il n'existe pas de produit visant à remédier à ces inconvénients en usage « professionnel ».

GB 2 209 744 A, FR 2 218 932 A1, CA1019 355 A1, US 4,015,973 A décrivent des granulés obtenus après une granulation classique de pierre à chaux avec un liant argileux.

### PROBLEME TECHNIQUE

La présente invention doit donc conserver les avantages connus des granulés, mais doit aussi minimiser leurs inconvénients en leur conférant une plus grande capacité de couverture du sol, sans pour autant être sensibles à l'humidité avant épandage, tout en résistant aux chocs du procédé de fabrication, du chargement en sacs ou en vrac, du transport et de l'épandage final sur le sol. Naturellement, il est également impératif de réduire au maximum l'émission de poussières, et naturellement de conserver les propriétés « nutritives » ou « d'amélioration du sol » de l'engrais ou de l'amendement minéral basique.

De plus, l'invention vise également à tenter de rendre de tels amendements efficaces même lorsque le travail du sol est impossible ou difficile, dans les prairies naturelles ou dans les vignes par exemple.

Le granulé doit également être à la fois suffisamment résistant mécaniquement pour résister à sa fabrication et au transport, comme on l'a vu ci-dessus, et être néanmoins capable de « fondre » sur le sol avec une très forte couverture du sol, ce qui évite ou limite le travail du sol (sauf dans certains types d'agriculture où, pour d'autres raisons, un travail du sol est de toutes façons nécessaire).

Dans ce qui suit, on emploiera aussi uniquement le terme « **amendement »** pour désigner des amendements minéraux basiques, notamment à base de carbonates et tout particulièrement du carbonate de calcium PCC (carbonate de calcium précipité - et/ou GCC (carbonate de calcium naturel - broyé), mais l'homme de métier comprendra que la solution retenue s'applique aussi, *mutatis mutandis,* aux engrais azotés, phosphatés, potassiques ou autres, seuls ou en mélange avec des amendements et d'une façon plus large aux matières fertilisantes. Le mot « amendement » désignera par simplicité toutes ces options.

On notera que l'invention vise surtout à rendre le granulé plus « efficace », et à éviter ou limiter la nécessité d'un travail du sol. L'invention ne vise pas à diminuer les doses, mais à rendre plus efficace la dose apportée. L'utilisateur final continuera probablement à employer les doses « usuelles », mais l'invention lui permettra de ne pas majorer les doses nécessaires du fait d'une efficacité réduite par défaut de dispersion ; il constatera alors évidemment toutes les améliorations liées au chaulage ou à la fertilisation des sols, y compris un meilleur rendement du fait d'une meilleure action contre l'acidification naturelle du sol.

### SOLUTION TECHNIQUE

Le moyen général retenu par l'invention est celui d'un délitage « dynamique » des granulés.

On entend par « délitage dynamique » toute forme de force capable de générer des micros granulés sur une forte surface du sol autour du granulé déposé sur le sol (large « couverture » du sol ») par éctatement, forte fragmentation, forte « dispersion », en impliquant une force interne tendant à faire éclater ou « exploser » le granulé lorsqu'il est au contact du sol et plus précisément de l'eau et/ou de l'humidité du sol. Ci-après pour simplifier « forte fragmentation ».

L'adjectif « fort » ou « forte » signifie ici un ordre de magnitude *très nettement supérieur,* comme on le verra dans les exemples, aux dispersions les plus proches connues.

On verra ci-dessous que l'invention vise des couvertures de sol pouvant atteindre 2 à 5 cm de diamètre, à comparer aux 0,3 à 0,7 cm des granulés de l'art antérieur.

La seule référence comparative sera ici naturellement les *granulés* de l'art antérieur, étant entendu que l'on peut obtenir une très bonne couverture avec notamment des poudres, mais avec des inconvénients majeurs : poussières, sensibilité au vent, etc ...

On utilise donc selon l'invention une propriété de moyen général dont la fonction est de provoquer un délitage dynamique du granulé d' « amendement » qui va, au contact de l'eau et/ou de l'humidité du sol, provoquer l'éclatement ou la dispersion ou l'« explosion » des particules élémentaires (c'est-à-dire des particules qui composent chaque granulé individuel). On augmente ainsi fortement les surfaces de contact produit / sol / eau, et donc on augmente la taille ou la surface ou le volume de la zone d'influence du granulé, **favorisant ainsi les réactions de neutralisation** qui sont attendues des amendements minéraux basiques ou **l'alimentation de la plante** par les nutriments contenus dans les engrais granulés.

L'invention concerne donc un amendement minéral notamment basique contenant comme base un carbonate minéral caractérisé en ce qu'il est compacté avant épandage et en ce qu'il comporte au moins un agent de « délitage dynamique » capable de provoquer en présence d'eau et/ou d'humidité, dans le granulé et/ou à sa surface, un éclatement, une forte fragmentation, une dispersion, une forte « dispersion », c'est-à-dire impliquant une force à l'intérieur et/ou à la surface du granulé, tendant à faire éclater ou « exploser » le granulé lorsque ledit granulé est au contact de l'eau et/ou de l'humidité, et notamment du sol et plus précisément de l'eau ou de l'humidité du sol, et caractérisé en ce que ledit agent de délitage dynamique est incorporé à raison de 0,5 - 0,7 à 6 - 7 % en masse, en poids sec du matériau à granuler dudit produit moyennement gonflant ou de ladite argile gonflante dans le granulé, de préférence de 1 à 6 - 7 %, et de manière encore préférée de 1 à 5 %, préférentiellement autour de 2, 3 et 4 %, ou mieux encore 2 %, en masse en poids sec, et est choisi parmi les acides faibles comme acide formique, citrique, ou, moins préféré, phosphorique, ou un polymère super absorbant anionique de type copolymères réticulés d'acrylamide et d'acrylate de potassium non solubles dans l'eau, ou consiste en, ou comporte, un produit moyennement gonflant, et en ce que de préférence ledit produit moyennement gonflant est choisi parmi les argiles moyennement gonflantes
Le tout dénommé « délitage dynamique » sauf mention contraire.

Notamment, l'invention concerne un tel amendement minéral caractérisé en ce que ledit carbonate minéral est le carbonate de calcium naturel ou précipité.

Ledit carbonate de calcium peut être remplacé en tout ou en partie par un ou d'autres minéraux tels que les dolomies, ou est remplacé en partie par un ou d'autres minéraux tels que les phosphates naturels en mélange avec l'amendement, engrais azotés ammoniacaux ou autres fertilisants ou leur mélanges.

### DESCRIPTION DE L'INVENTION

On décrira dans ce qui suit plusieurs types de réalisation de l'invention, supportant ledit « moyen général » de par la même fonction de « forte fragmentation du granulé individuel », fonction mise en oeuvre par le moyen d'une **force interne,** générée au contact de l'eau libre ou de l'humidité de l'air (on évitera au maximum cette exposition à l'humidité ambiante, durant toute la fabrication, stockage et transport pour des raisons évidentes, mais aussi au moment de l'épandage, afin que le délitage dynamique se produise sur le sol ou au plus près, afin de produire un effet maximal) et/ou de manière totalement préférée du sol, à l'intérieur et éventuellement en surface du granulé, mais essentiellement à l'intérieur du granulé, de par la réaction d'au moins un des composants du granulé avec l'eau du sol (ou de son humidité), de manière extrêmement préférée, l'eau entrant dans le granulé, qui peut mieux exercer son action en profondeur dans le granulé.

Le Demandeur, suivant la « fonction générale » décrite ci-dessus, a songé à « doper » l'amendement minéral basique, notamment un amendement calcaire, par de la chaux vive (CaO).

Cependant, cela se traduit par un échec très net car la chaux vive peut, certes, gonfler au contact de l'eau du sol et faire éclater le granulé, mais, auparavant, comme c'est un produit extrêmement réactif et avide d'eau, elle va aussi réagir au contact de la seule humidité de l'air et gonfler. Les granulés vont donc éclater par exemple lors du transport ou du stockage, ce qui est l'inverse du but fixé.

Au travers de cet exemple, on voit que la même eau qui pourrait favoriser un délitage dynamique est aussi un obstacle à la tenue dans le temps du granulé.

Cette solution logique a déjà été expérimentée, et évidemment rejetée, ce qui a créé un préjugé contre ce genre de technologie par « gonflement » ; en effet, on ne peut ni supprimer l'humidité ambiante, ni transporter les granulés dans des sacs sous vide ou sous azote ou autres solutions éminemment impossibles.

L'industrie y a donc renoncé une fois pour toutes, et le mérite du Demandeur est d'avoir néanmoins poursuivi dans cette voie.

En fait, le Demandeur s'est ensuite dirigé vers la voie de la très forte fragmentation, comme définie ci-dessus, mais en cherchant à employer non pas une base réactive comme la chaux mais au moins un additif acide. Ce dernier réagissant avec le carbonate de l'amendement générerait une production intense de bulles à l'extérieur et préférentiellement à l'intérieur du granulé, provoquant ainsi son éclatement.

On aurait pu penser qu'un additif acide en entrant en réaction avec l'amendement calcaire basique en réduirait l'efficacité ; aux faibles doses (de l'ordre de 0.5 - 2 %, de préférence autour de 1%, en poids sec) que le Demandeur à mises au point, cet effet est quantitativement négligeable.

Pour maximiser la réaction d'éclatement, il aurait été logique d'employer des acides forts mais ils sont dangereux à manipuler, et réagissent, après essais, trop fortement, avec de plus, en raison de leur grande réactivité, des difficultés d'incorporation lors du « process » de fabrication.

On aurait pu penser à des acides forts micro-encapsulés, par exemple par un polymère, etc... mais de telles solutions sont évidemment incompatibles avec un autre impératif de l'invention, qui est celui de l'acceptabilité économique. En effet, les solutions techniques trouvées ne doivent pas conduire à une augmentation trop significative des prix des granulés.

Le Demandeur a envisagé l'utilisation d'acide phosphorique, mais le phosphore est déjà mis sur le marché par d'autres voies et il serait ici en quantité trop petite pour être valorisable en agriculture. La difficulté d'incorporer ce type de produit dans un « process » industriel et son action corrosive ont conduit le Demandeur à ne pas privilégier cette voie.

C'est donc une solution possible, mais nettement moins préférée car moins prévisible dans ses effets, du fait de la compétition décrite ci-dessus.

Le Demandeur a donc essayé d'autres acides, à la fois « faibles » pour ne pas être trop réactifs, et n'entrant pas en compétition avec les composants d'un amendement ou engrais du type considéré ici.

Le Demandeur a essayé des acides connus et facilement accessibles sur le marché, comme acide formique, citrique, mais le dégagement gazeux formé s'est révélé insuffisant pour provoquer au champ une véritable dispersion des particules élémentaires du granulé ; on a certes obtenu des fragmentations couvrant une zone de environ 8 - 10 mm au laboratoire, donc mieux que le délitage gravitaire, mais cela ne répondait pas à l'ambition de très forte fragmentation que s'était fixée le Demandeur.

La mélasse (sucre en suspension dérivé de la culture de la betterave) employée à la dose de 2 - 3 % en poids sec est utilisée comme additif durant la granulation, et satisfait bien aux exigences de granulation, mais la fonte du granulé obtenu est uniquement gravitaire, sans aucun caractère dynamique ou actif.

Poursuivant dans une autre voie, le Demandeur a testé en laboratoire et au champ des granulés fabriqués en leur incorporant des polymères acryliques dits « super-absorbants anioniques», à base de copolymères réticulés d'acrylamide et d'acrylate de potassium de différentes granulométries (de 300 µm à 3 mm) à différentes doses allant de 0,1 % à 2 %. Les tests de délitage réalisés ont donné des résultats de délitage dynamique intéressants (voir résultats des essais au champ). Toutefois, le coût de cette technologie, et la nature même des polymères utilisés ont conduit le Demandeur à s'intéresser à une technologie alternative moins coûteuse et plus naturelle, c'est-à-dire ne faisant pas appel à la chimie de synthèse.

Au final, après tous ces essais, la solution retenue par le Demandeur est de passer de manière totalement préférée et avec des résultats surprenants, par une voie totalement différente, c'est-à-dire par un produit moyennement gonflant, de type argile moyennement gonflante, notamment du type bentonite (argile gonflante bien connue, qu'il est inutile de décrire). Cette argile est utilisée soit comme agglomérant, soit comme agent de rétention secondaire dans certains systèmes dits « duals » pour la fabrication de feuilles de papier ou carton, ou comme alourdissant dans les boues de forage et analogues. Ses propriétés de gonflement à l'eau, pourtant bien connues, n'ont jamais été employées pour réaliser une fragmentation « dynamique » selon l'invention. De façon assez surprenante, l'utilisation de bentonite pour cette application spécifique a révélé des potentialités d'éclatement c'est-à-dire de coopération très active à majoritaire audit « délitage dynamique » bien supérieures à ce qu'aurait laisser supposer son simple gonflement, au niveau de l'éclatement lors des contrôles en laboratoire mais aussi et surtout lors des essais au champ : après contemplation des résultats surprenants, et sans vouloir être lié par une théorie, le Demandeur suggère qu'il se forme une synergie entre la force gonflante naturelle et la contrainte physique de compression exercée par le carbonate lors de la compaction en usine.

Cette « puissance » de magnitude imprévisible est surprenante et participe fortement à l'invention.

On a employé un mode de granulation classique mais comportant une étape de compactage, c'est-à-dire addition et incorporation de mélasse, puis mélange à sec de l'amendement et de la bentonite, agitation à haute vitesse, puis passage entre deux rouleaux compacteurs pour former une plaque continue, sorte de « tapis » de 2 à 3 mm d'épaisseur environ, que l'on casse ensuite pour former des granulés polygonaux qui seront ensuite érodés et passés au crible avant de constituer le granulé définitif plus ou moins régulier d'un diamètre d'environ 2 à 5 mm.

Par « granulés polygonaux plus ou moins réguliers », on entend un granulé dont le volume considéré sous un angle quelconque, est visible sous la forme soit d'un polygone régulier, soit d'un polygone dont les côtés (ou les faces) ne sont pas entièrement plans, c'est-à-dire pouvant être abîmés, brisés, écornés par les étapes de fabrication, et/ou de conditionnement, et/ou de transport et/ou d'épandage.

Une première série d'essais de fabrication avec de la bentonite de marque IMPERSOL ™ à différentes doses, de 5 à 1 % en masse, a été réalisée sur des lots de 10 kg initialement en pilote de fabrication. Ces essais ont permis de valider le procédé de fabrication (pas de poussières, possibilité de compacter, pas d'encrassement des équipements, bonne solidité et bonne résistance à l'humidité lors du stockage, du transport, des manipulations, de l'épandage). La dose de 2 %, en masse en poids sec du matériau à granuler, a présenté un excellent compromis technico-économique, avec de bons résultats de délitage dynamique en laboratoire. Un essai au champ réalisé (cf. fin du texte), sur un sol limoneux après pluviosité simulée (pulvérisation de 15 mm) a montré d'excellentes propriétés de délitage dynamique et de fragmentation puisqu'il a conduit à des zones de couverture de l'ordre de 3,5 cm de diamètre.

D'autres essais de fabrication sur des lots de 10 tonnes en vraie fabrication industrielle se sont déroulés ensuite. Les granulés obtenus présentaient aussi des plages d'éclatement au champ très favorables, en général de l'ordre de 2 à 4 cm voire plus, pour des doses allant de 1,5 à 3 % en poids, avec un étalement de résultats entre 2 et 3 cm de diamètre pour des doses voisines de 2 % en poids.

La fiche technique IMPERSOL ™ désigne ce produit comme une argile appartenant à la famille des smectites. Son aspect est une poudre claire de 14 % maximum de teneur en eau, avec 30 % maximum de refus au tamis de 75 microns (en voie sèche) et d'un poids spécifique de 2,3 g/cm³.

### Autres argiles utilisables

D'autres argiles sont utilisables pourvu qu'elles aient par constitution des propriétés de gonflement et qu'elles provoquent l'éclatement du granulé. En effet, les essais conduits par le Demandeur avec d'autres argiles ne permettent pas systématiquement d'obtenir les effets escomptés.

### Autres minéraux utilisables

Des essais ont été conduits avec différents matériaux comme support : carbonate de calcium d'origine naturelle provenant de différentes carrières, dolomies et mélange dolomie avec carbonate de calcium.

Il sera possible d'employer lesdits carbonates naturels ou précipités (PCC) en mélanges entre eux, et employer d'autres minéraux que les carbonates de calcium naturels ou précipités (PCC), en remplaçant en tout ou en partie ledit ou lesdits carbonate(s) par des minéraux tels que dolomies, phosphates naturels en mélange avec l'amendement (pour bénéficier du P205 apporté pour les plantes, et non pas pour son effet acide), engrais azotés ammoniacaux ou autres engrais. Ces matériaux sont tout à fait connus de l'homme de métier et ne seront donc pas décrits en détail ici.

Les engrais azotés nitriques et les sels de potasse ne sont pas concernés, car ils sont très solubles naturellement.

La présente invention sera mieux comprise à la lecture des exemples suivants, présentés à titre non limitatif.

### A Exemples de compactage :

Le Demandeur a effectué des essais de compactage en employant divers composants destinés à assurer les propriétés de délitage dynamique.

Pour ces essais de compactage, on a retenu les critères suivants pour apprécier l'intérêt et les résultats de chaque produit testé, sélection des produits en fonction de différents critères :
- Tenue des plaquettes.
- Qualité du délitage à chaud.
- Essais à froid dans l'eau et sur coton humide.
- Coût des produits.

### B Exemples et résultats de dosages :

La bentonite Impersol ™ a été testée à 5 %, 2%, 1 % et 0,5 % en poids du matériau en poudre servant de support.

Pour d'autres produits, la plage effectivement explorée a été plus large vers des taux plus faibles : 0,01 %. La limite haute a été dictée par l'abaissement corrélatif des teneurs en éléments fertilisants ou en valeur neutralisante dans le granulé et l'augmentation du prix de revient.

Des taux d'incorporation de l'ordre de 10 % sont possibles et ont été envisagés, mais sont inutilement onéreux par rapport à l'amélioration des propriétés.

On a ensuite baissé progressivement les doses.

La limite basse 0,5% correspond à une amélioration qui n'est presque plus perceptible par rapport au témoin non traité, et qui constitue donc la limite basse (avec 1 % plus réaliste).

Les exemples ci-dessus délimitent une plage efficace (y compris en tenant compte du surcoût pour l'utilisateur final) et préférée est autour de 2 %.

### C Résultats de la bentonite

On a utilisé des granulés additivés avec de la bentonite Impersol™ décrite ci-dessus, à différents dosages.

Pour chaque dose et aussi pour une modalité sans additif (témoin), 16 granulés ont été disposés sur un sol agricole selon une grille de 5 cm x 5 cm. Une portion de plaquette issue des rouleaux de compactage a également été disposée au milieu de la grille (la plaquette est ensuite cassée pour produire les granulés). L'étude de ce morceau de plaquette est intéressante, même si bien entendu ce sont des granulés qui sont employés au champ.

A l'aide d'un pulvérisateur à dos de marque Berthoud ™ équipé de buses à fentes, on a fait l'apport de 15 mm de pluie sur ce dispositif.

La quantité de pluie simulée a été contrôlée par un pluviomètre.

Des photos ont été prises avant et surtout après simulation de pluie, pour chacune des doses testées et du témoin.

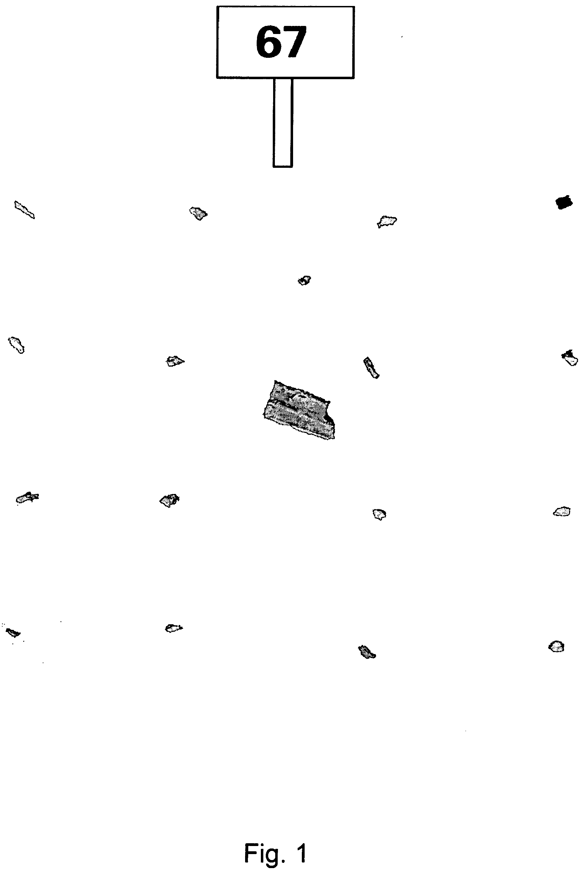

La figure 1 annexée (zone 67) représente un essai de granulés témoin c'est-à-dire sans bentonite. Les granulés et le morceau de plaquette sont intacts ou quasiment intacts même après 15 mm de pluie.

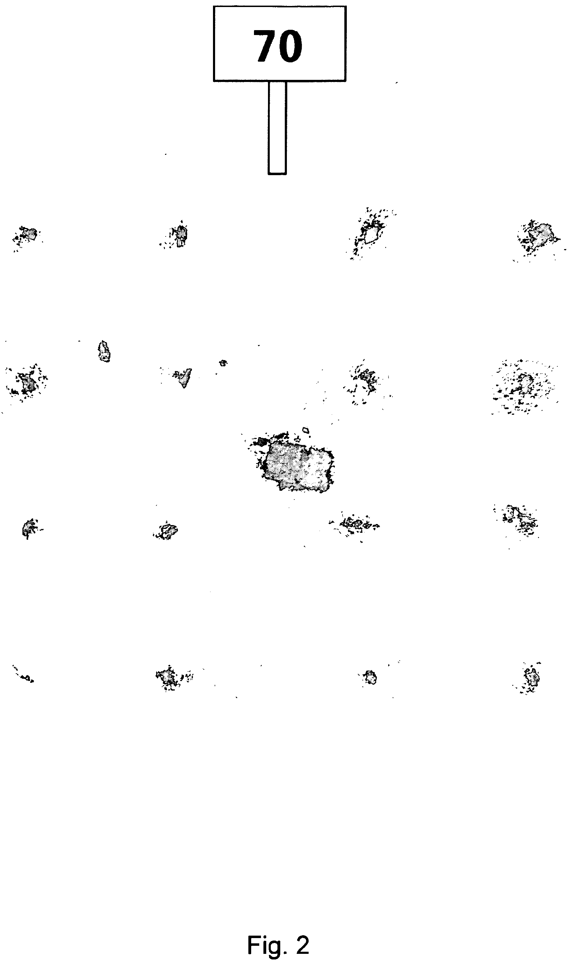

La figure 2 annexée (zone 70) représente des granulés contenant 1 % de bentonite. On note des traces visibles de délitage dynamique selon l'invention, avec déjà une bonne couverture de zone.

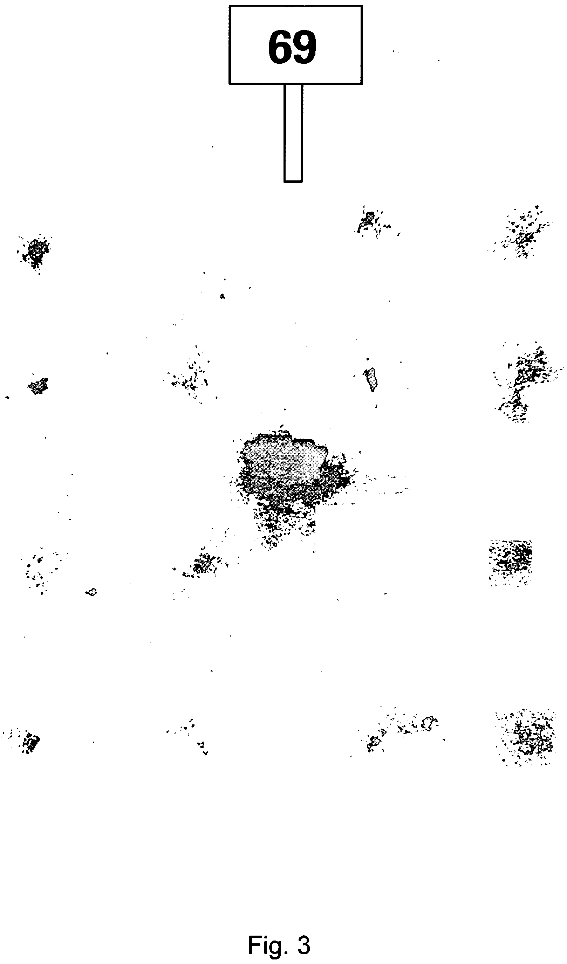

La figure 3 annexée (zone 69) représente un dosage à 2 % de bentonite. On note un délitage supérieur à celui de la figure 2, quelques granulés étant passés sous forme de poudre couvrant une zone déjà importante. On remarque également le délitage dynamique qui s'est opéré sur le morceau de plaquette.

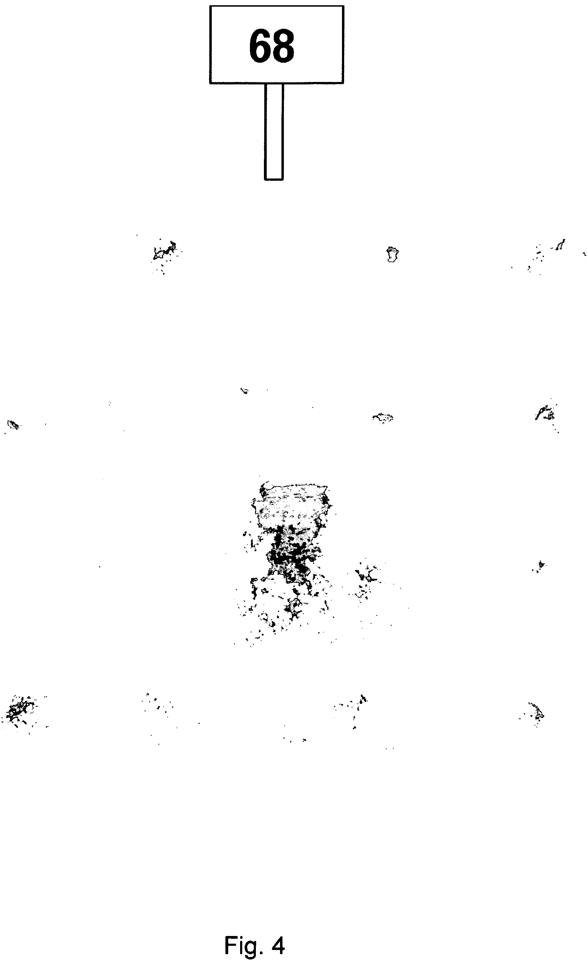

La figure 4 annexée (zone 68) représente un dosage à 5 % de bentonite. On note qu'il ne reste plus que un granulé (en bas à gauche) qui semble avoir été moins touché que les autres, avec néanmoins des traces blanches couvrant une large zone autour.

La mise à plats comparative des documents, photos et graphiques montre une très bonne cohérence.

### Mode opératoire d'évaluation de la surface couverte :

### 1) concernant les mesures de surface de colonisation du sol

Des photos disponibles ont été tirées à l'échelle 1.

Visuellement, en comparaison à plat, les écarts sont évidents.

Pour être plus précis et factuel, on a encadré entre deux traits verticaux les limites de colonisation au sol de chacun des 16 granulés pour chaque modalité testée :
Granulé Témoin non traité avant pluie
Granulé Témoin non traité après 15 mm de pluie
Granulé traité à 1% d'Impersol™ après 15 mm de pluie
Granulé traité à 2% d'Impersol après 15 mm de pluie
Granulé traité à 5% d'Impersol après 15 mm de pluie

On a mesuré l'espace entre les deux traits.

On a ensuite fait la somme des 16 diamètres, ce qui donne une valeur raisonnablement représentative de la colonisation de la surface du sol, et en tous cas reproductible.

Ces valeurs confirment pleinement l'impression visuelle.

On a utilisé ces valeurs comme indicateurs de performance.

A partir de la variable uni-dimensionnelle « somme des diamètres des 16 granulés », on a élevé cette valeur au carré pour aboutir à la notion de surface, bi-dimensionnelle et plus proche de l'effet recherché (notion de couverture de surface).

Les valeurs obtenues ont été comparées entre les différentes modalités.

On voit que les modalités « Granulé Témoin non traité avant pluie » et « Granulé Témoin non traité après 15 mm de pluie » sont identiques. On peut donc imputer toutes choses égales par ailleurs les résultats de délitage dynamique à la seule influence des additifs utilisés.

### 2) concernant les courbes obtenues

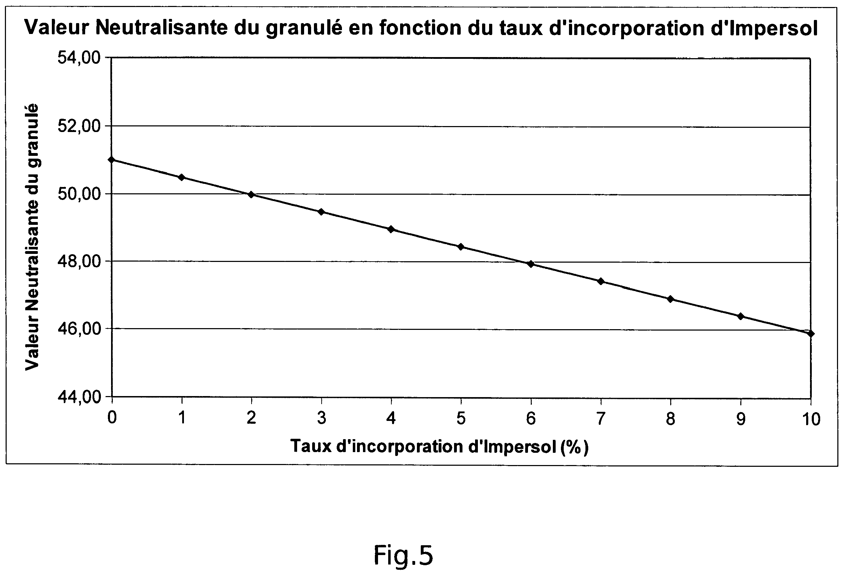

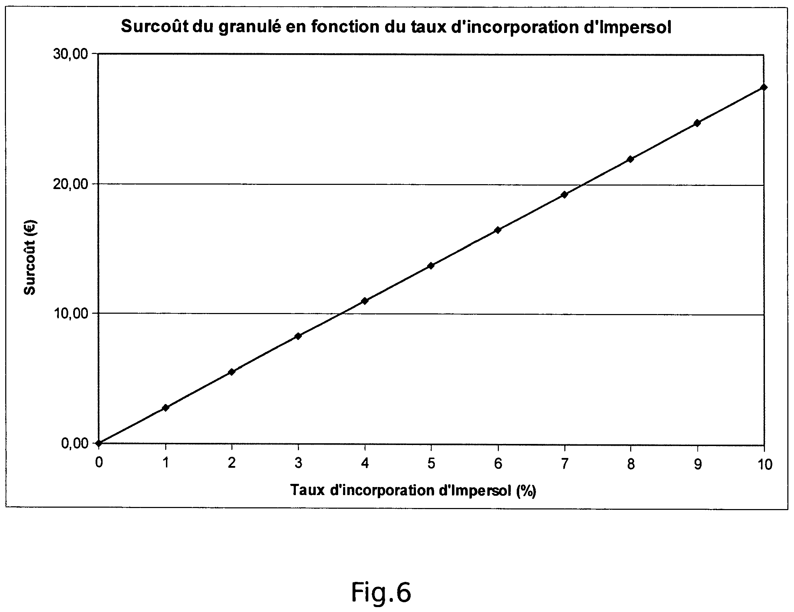

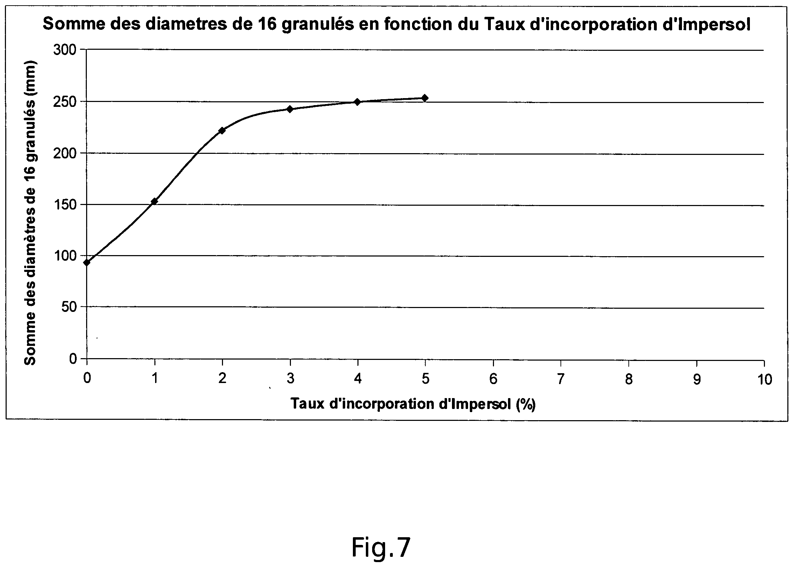

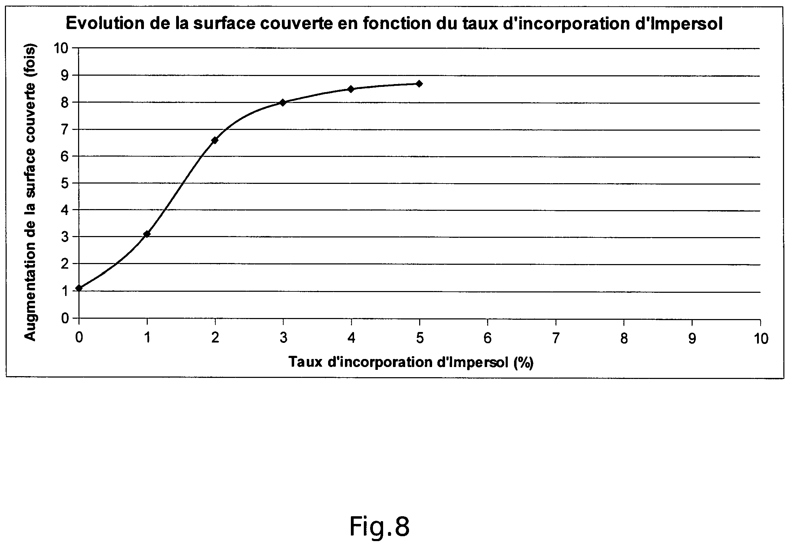

Plusieurs courbes ont été tracées sur les bases ci-dessus, en fonction du taux d'incorporation de l'Impersol™ :
- Valeur neutralisante (figure 5)
- Surcoûts (figure 6)
- Somme des diamètres des 16 granulés (figure 7)
- Surface couverte (valeur ci-dessus au carré) (figure 8)

Les surfaces couvertes sont ainsi multipliées par un facteur allant de 1 à près de 10, selon les modalités testées.

En plaçant les courbes les unes au dessous des autres, il est clair qu'il faut trouver pour la plage optimale un compromis entre :
l'amélioration de surface couverte,
l'augmentation de coût,
la diminution de la valeur neutralisante.

Ces courbes aideront l'homme de métier à adapter les valeurs et plages de dosage décrites ci-dessus à l'utilisation particulière qu'il envisagera,

### 3) concernant le choix de la plage de taux d'incorporation

Nous situons, au vu des courbes, ce compromis autour de 2 %, entre 1 et 3 % préférentiellement, car c'est autour de 2 % que se trouve le point d'inflexion de la courbe d'augmentation des surfaces (point à partir duquel le coût augmente plus vite et la valeur neutralisante descend plus vite que la surface couverte n'augmente).

Il apparaît clairement qu'un taux d'incorporation supérieur à 5 % n'apportera plus grand chose, la pente de la courbe « surface » devenant alors très faible.

On note l'apparition d'un plateau de type asymptotique au-delà de 5 %.

Les courbes annexées justifient donc pleinement les valeurs de dosage et plages de dosage décrites ci-dessus.

Il est par ailleurs surprenant de constater qu'il apparaît un « plateau » à partir de environ 4 - 6 %, notamment 5 - 6 % selon la courbe « somme des diamètres de 16 granulés = f (% incorporation) ».

On retrouve ce plateau sur la figure 7 « Evolution de la somme des diamètre des 16 granulés ».

Concernant la **diminution du taux de fines à recycler au cours du procédé** de fabrications (car les granulés traités à l'Impersol™ semblent, en sortie de compacteur, donner moins de poussière (taux de particules de diamètre inférieur à 1 mm)), cette diminution du taux de production de poussières est un avantage important dans l'industrie considérée.

La limite inférieure de la plage se situe autour de 0,5 - 0,7 % (résultat très moyen mais coût faible) et la limite supérieure autour de 5 -6 %, car au-delà, on note deux effets néfastes qui sont que la valeur neutralisante ou la teneur en éléments fertilisants de l'amendement baisse quand la teneur en argile monte, le coût devenant de plus trop élevé pour un effet de délitage supplémentaire ne justifiant pas ce surcoût.

Une plage efficace et raisonnablement peu coûteuse, et ne faisant pas « perdre » trop de valeur neutralisante ou de teneur, se situera donc entre 2 et 4 %, de préférence 2 - 3 %, et une valeur optimale semble être autour de 2% c'est à dire 1,8 à 2,3 % si l'on se réfère aux figures annexées.

L'homme de métier comprendra que la limite inférieure est dictée par l'apparition d'un effet décelable de délitage dynamique, tandis que la limite supérieure est plutôt dictée par le fait que le délitage dynamique supplémentaire n'est pas assez important pour justifier le coût additionnel.

L'homme de métier comprendra également que ces plages peuvent varier d'une argile à l'autre, sans cependant s'écarter fortement des valeurs ci-dessus, et que par conséquent il pourra ajuster le dosage, selon l'argile moyennement gonflante employée, par quelques essais simples de routine et comparaison avec les exemples présentés ici.
Enfin, l'homme de métier pourra extrapoler les valeurs ci-dessus à d'autres argiles gonflantes, car le fabricant indique le pourcentage de gonflement sur ses fiches techniques : il est donc facile de se repérer par rapport au produit Impersol™ dont la fiche technique Edition 02 du 23 08 2002 indique un gonflement de 11 ml/g au minimum (test CTIF, recommandation 403).

### Protocole détaillé des essais de délitage au champ pour caractériser l'invention.

### Objectif :

Cet essai a pour but d'observer l'évolution des granulés traités ou non sur un sol agricole ré-humidifié, sur lequel sera appliquée, à l'aide d'un pulvérisateur, l'équivalent de 15 mm de pluie.

### PLAN DE L'EXPERIENCE :

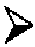 1^{ère} étape :
   - Reconstitution à partir du sol d'un champ voisin d'une parcelle artificielle d'environ 1 m x 1,30 m avec une bonne visibilité, pour faciliter les prises de vues sans être gêné par la présence de la végétation.
   - Ré-humidification artificielle initiale pour revenir à un état d'humidité comparable à celui de la parcelle originelle car le sol prélevé est devenu très sec.
      L'état initial est ressuyé, sans eau libre, à la capacité au champ.
   - Séparation en 12 cases d'environ 30 cm x 30 cm
   - Dépôt de 16 granulés en damier sur une grille au pas de 6 cm d'environ 24 cm x 24 cm sur chaque case et ajout d'un fragment de plaquette de fabrication au centre.
   - Les trois produits jugés les plus efficaces lors des essais précédents sont testés et photographiés avec un témoin et trois doses d'incorporation, différentes selon les produits.
      ∘ Copolymère réticulé super absorbant d'acrylamide et d'acrylate de potassium, comme de préférence mais à titre non limitatif, le produit AQUASORB™ KC.
      ∘ Argile moyennement gonflante du type décrit ci-dessus, comme de préférence mais à titre non limitatif le produit IMPERSOL™.
      ∘ Acide citrique ; Comme indiqué ci-dessus, l'acide citrique est un acide faible qui peut être employé dans l'invention, mais cependant de manière nettement moins préférée que l'argile moyennement gonflante ou le copolymère réticulé super absorbant. Ce produit est employé ici pour mieux marquer les « bornes » raisonnables » de la présente invention.
      ∘ Pour rendre la comparaison visuelle plus évidente, les témoins non traités sont sur la ligne du haut, suivis des traitements à doses forte juste en dessous (contraste maximum), puis dose moyenne, et enfin, dose faible en bas.
      Chaque case élémentaire reçoit un numéro de 63 à 74, de haut en bas d'abord, puis de gauche à droite pour les colonnes suivantes.
      ▪ Echantillon A : Aquasorb KC ™
         o A témoin : Témoin sans Aquasorb KC™ (n° 63)
         o A 0,1% : Contient 0,1% d'Aquasorb KC™ (n° 66)
         o A 0,15% : Contient 0,15% d'Aquasorb KC™ (n° 65)
         o A 0,2% : Contient 0,2% d'Aquasorb KC™ (n° 64)
      ▪ Echantillon B : Impersol™
         o B témoin : Témoin sans Impersol™ (67)
         o B 1% : Contient 1% d'Impersol™ (70)
         o B 2% : Contient 2% d'Impersol™ (69)
         o B 5% : Contient 5% d'Impersol™ (68)
      ▪ Echantillon C : Acide citrique poudre
         o C témoin : Témoin sans acide citrique (71)
         o C 0,5% : Contient 0,5% d'acide citrique (74)
         ∘ C 1% : Contient 1% d'acide citrique (73)
         o C 2% : Contient 2% d'acide citrique (72)
   - Prise de photos pour chaque case, afin de pouvoir comparer leurs évolutions.
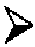 2^{ème} étape :
   - Prise de photos aux étapes suivantes :
      - T1 à 0 mm de précipitations artificielles
      - T2 à 5 mm de précipitations artificielles
      - T3 à 15 mm de précipitations artificielles

### ANALYSE DES RESULTATS :

Il apparaît clairement des différences :
entre les échantillons témoins et les échantillons avec adjuvant,
entre les doses pour un même adjuvant,
entre les différents adjuvants.
   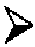 Comparaison des trois pourcentages d'Aquasorb™ (+ témoin) à 15 mm.
      Très bon délitage avec l'Aquasorb™, nettement meilleur à 0,2 % qu'à 0,1 % et 0,15 %.
   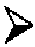 Comparaison des trois pourcentages d'argiles gonflantes (+ témoin) à 15 mm:
      Excellent délitage.
   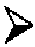 Comparaison des trois pourcentages d'acide citrique (+ témoin) à 15 mm :

Des effets par rapport au témoin, mais beaucoup moins impressionnants que les autres adjuvants. L'acide citrique est donc le moins efficace des trois produits testés.

Les conclusions sont celles déjà indiquées ci-dessus.

L'homme de métier comprendra que l'amendement est adapté techniquement au cas par cas pour former des couvertures de sol pouvant atteindre 2 à 5 cm de diamètre pour un granulé de taille standard de 2 à 5 mm d'épaisseur , ledit, granulé se présentant sous forme de polygone plus ou moins régulier, et saura effectuer sans difficulté ces ajustements techniques a la lecture de la description et des exemples ci-dessus.

## Revendications

1. Amendement minéral notamment basique contenant comme base un carbonate minéral **caractérisé en ce qu'**il est compacté avant épandage et **en ce qu'**il comporte au moins un agent de « délitage dynamique » capable de provoquer dans le granulé un éclatement, une forte fragmentation, une dispersion, une forte « dispersion », c'est-à-dire impliquant une force à l'intérieur et / ou à la surface du granulé, tendant à faire éclater ou « exploser » le granulé, lorsque ledit granulé est au contact d'eau et/ou d'humidité et notamment du sol et plus précisément de l'eau ou de l'humidité du sol, et **caractérisé en ce que** ledit agent de délitage dynamique est incorporé à raison de 0,5 - 0,7 à 6 - 7 % en masse, en poids sec du matériau à granuler dudit produit moyennement gonflant ou de ladite argile gonflante dans le granulé, de préférence de 1 à 6 - 7 %, et de manière encore préférée de 1 à 5%, préférentiellement autour de 2, 3 et 4 %, ou mieux encore 2 %, en masse en poids sec, et est choisi parmi les acides faibles comme acide formique, citrique, ou, moins préféré, phosphorique, ou un polymère super absorbant anionique de type copolymères réticulés d'acrylamide et d'acrylate de potassium non solubles dans l'eau, ou consiste en, ou comporte, un produit moyennement gonflant choisi parmi les argiles moyennement gonflantes.

2. Amendement minéral selon la revendication 1, **caractérisé en ce que** ledit carbonate minéral est le carbonate de calcium naturel ou précipité (PCC).

3. Amendement minéral selon la revendication 2 **caractérisé en ce que** ledit carbonate de calcium est remplacé en tout ou en partie par un ou d'autres minéraux tels que les dolomies, ou est remplacé en partie par un ou d'autres minéraux tels que les phosphates naturels en mélange avec l'amendement, engrais azotés ammoniacaux ou autres fertilisants ou leur mélanges.

4. Amendement minéral selon l'une quelconque des revendications 1 à 3, **caractérisé en ce que** ladite argile moyennement gonflante est une bentonite.

5. Amendement minéral selon l'une quelconque des revendications 1 à 4, **caractérisé en ce que** ladite argile moyennement gonflante, notamment une bentonite, est incorporée à raison de 0,5 - 0,7 à 6 - 7 %, de préférence 1 à 6 - 7 %, de manière encore préférée 1 à 5, préférentiellement de autour de 2, 3 et 4 %, et mieux encore de 2%, en masse en poids sec du matériau à granuler.

6. Amendement minéral selon la revendication 4 ou 5, **caractérisé en ce que** ladite bentonite est une argile appartenant à la famille des smectites, avec un aspect de poudre claire de 14 % maximum de teneur en eau, avec 30 % maximum de refus au tamis de 75 microns (en voie sèche) et d'un poids spécifique de 2,3 g/cm³.

7. Procédé de fabrication de l'amendement en granulés à délitage dynamique selon l'une quelconque des revendications 1 à 6, **caractérisé en ce que** on effectue une granulation classique mais comportant une étape de compactage par addition et incorporation de mélasse, mélange à sec de l'amendement et de l'agent de délitage dynamique qui est choisi parmi les acides faibles comme acide formique, citrique, ou, moins préféré, phosphorique, ou un polymère super absorbant anionique de type copolymères réticulés d'acrylamide et d'acrylate de potassium non solubles dans l'eau, ou consiste en, ou comporte, un produit moyennement gonflant, choisi parmi les argiles moyennement gonflantes, et consiste en, ou comporteune argile moyennement gonflante, notamment une bentonite, à raison de 0,5 - 0,7 à 6 - 7 %, de préférence 1 à 6 - 7 %, de manière encore préférée 1 à 5%, préférentiellement de autour de 2, 3 et 4 %, et mieux encore de 2 %, en masse en poids sec du matériau à granuler, agitation à haute vitesse, puis passage entre deux rouleaux compacteurs pour former une plaque continue, sorte de « tapis » de 2 à 3 mm d'épaisseur environ, que l'on casse ensuite pour former des granulés polygonaux qui seront ensuite érodés et passés au crible avant de constituer le granulé définitif, en forme de polygones plus ou moins réguliers.

8. Procédé selon la revendication 7 **caractérisé en ce que** ledit carbonate minéral est le carbonate de calcium naturel ou précipité (PCC).

9. Procédé selon la revendication 7 ou 8, **caractérisé en ce que** le carbonate de calcium est remplacé en tout ou en partie par un ou d'autres minéraux tels que les dolomies, ou est remplacé en partie par un ou d'autres minéraux tels que les phosphates naturels en mélange avec l'amendement, engrais azotés ammoniacaux ou autres fertilisants ou leur mélanges.

10. Application des amendements selon la revendication 9 dans les secteurs des matières fertilisantes, plus particulièrement les amendements et les engrais utiles dans tous les domaines de l'agriculture en général tels que l'agriculture céréalière et fourragère, les grandes cultures, les cultures d'oléagineux, de protéagineux jusques et y compris dans les domaines connexes tels que sylviculture, cultures forestières en général, pépinières, production de légumes et légumineuses, ou tout autres types d'agriculture, y compris les prairies, les cultures de biomasse destinées à la production d'énergie, les cultures de couverts végétaux à des fins environnementales et les usages domestiques ou de loisir sur gazon ou terrain mis en herbe.

## Patentansprüche

1. Mineralischer Bodenverbesserer, insbesondere basischer Beschaffenheit, der als Base ein mineralisches Carbonat enthält, **dadurch gekennzeichnet, dass** er vor dem Ausbringen verdichtet wird, und dadurch, dass er mindestens ein Mittel zum "dynamischen Zerfall" aufweist, welches dazu befähigt ist, in dem Granulatkorn ein Aufbrechen, eine starke Fragmentierung, eine Dispersion, eine starke "Dispersion" zu bewirken, d.h. mit Beteiligung einer Kraft, die im Inneren und/oder an der Oberfläche des Granulatkorns wirkt und dazu neigt, das Granulatkorn aufzubrechen oder "auseinanderzusprengen", wenn das Granulatkorn mit Wasser und/oder Feuchtigkeit und insbesondere mit dem Boden in Kontakt ist, genauer gesagt mit dem Wasser oder der Feuchtigkeit des Bodens, und **dadurch gekennzeichnet, dass** das dynamische Zerfallsmittel zu 0,5 - 0,7 bis 6 - 7 Massen-%, bezogen auf das Trockengewicht des zu granulierenden Materials des mäßig quellend wirkenden Produkts oder des quellend wirkenden Tons innerhalb des Granulatkorns beigemischt wird, vorzugweise zu 1 bis 6 - 7 %, auf wiederum bevorzugte Weise zu 1 bis 5 %, bevorzugt zu ungefähr 2, 3 und 4 %, oder besser noch zu 2 Massen-% des Trockengewichts, wobei es aus den schwachen Säuren wie Ameisensäure, Zitronensäure oder, mit geringerem Vorzug, Phosphorsäure, oder einem anionischen superabsorbierenden Polymer vom Typ wasserunlösliche vernetzte Copolymere aus Acrylamid und Kaliumacrylat ausgewählt ist, oder aus einem mäßig quellend wirkenden Produkt, welches aus den mäßig quellend wirkenden Tonsorten ausgewählt ist, besteht oder ein solches aufweist.

2. Mineralischer Bodenverbesserer nach Anspruch 1, **dadurch gekennzeichnet, dass** es sich bei dem mineralischen Carbonat um natürliches Calciumcarbonat oder gefälltes Calciumcarbonat (PCC) handelt.

3. Mineralischer Bodenverbesserer nach Anspruch 2, **dadurch gekennzeichnet, dass** das Calciumcarbonat vollständig oder teilweise durch einen oder andere Mineralstoffe, wie etwa Dolomite, ersetzt wird, oder es vollständig oder teilweise durch einen oder andere Mineralstoffe wie etwa natürliche Phosphate in Mischung mit dem Bodenverbesserer, ammoniakalische Stickstoffdüngemittel oder andere düngend wirkende Stoffe oder deren Mischungen ersetzt wird.

4. Mineralischer Bodenverbesserer nach einem beliebigen der Ansprüche 1 bis 3, **dadurch gekennzeichnet, dass** es sich bei der mäßig quellend wirkenden Tonsorte um einen Bentonit handelt.

5. Mineralischer Bodenverbesserer nach einem beliebigen der Ansprüche 1 bis 4, **dadurch gekennzeichnet, dass** die mäßig quellend wirkende Tonsorte, insbesondere ein Bentonit, zu 0,5 - 0,7 bis 6 - 7 %, vorzugsweise zu 1 bis 6 - 7 %, auf wiederum bevorzugte Weise zu 1 bis 5 %, bevorzugt zu ungefähr 2, 3 und 4 %, oder besser noch zu 2 Massen-% des Trockengewichts des zu granulierenden Materials eingearbeitet wird.

6. Mineralischer Bodenverbesserer nach Anspruch 4 oder 5, **dadurch gekennzeichnet, dass** es sich bei dem Bentonit um eine Tonsorte handelt, die der Familie der Smektite angehört, wobei sie das Erscheinungsbild eines hellen Pulvers mit einem Wassergehalt von höchstens 14 %, mit einem Rückstand von höchstens 30 % beim (trockenen) Durchgang durch ein 75-Mikrometer-Sieb und mit einem spezifischen Gewicht von 2,3 g/cm³ hat.

7. Verfahren zur Herstellung des granulatförmigen Bodenverbesserers mit dynamischem Zerfall nach einem beliebigen den Ansprüche 1 bis 6, **dadurch gekennzeichnet, dass** eine herkömmliche Granulierung durchgeführt wird, wobei diese jedoch einen Schritt des Verdichtens durch Zusatz und Einarbeitung von Melasse aufweist, der Bodenverbesserer mit dem Mittel zum dynamischen Zerfall in trockenem Zustand vermischt wird, wobei letzteres aus den schwachen Säuren wie Ameisensäure, Zitronensäure oder, mit geringerem Vorzug, Phosphorsäure, oder einem anionischen superabsorbierenden Polymer vom Typ wasserunlösliche vernetzte Copolymere aus Acrylamid und Kaliumacrylat ausgewählt ist, oder aus einem mäßig quellend wirkenden Produkt, welches aus den mäßig quellend wirkenden Tonsorten ausgewählt ist, besteht oder ein solches aufweist, und aus einer mäßig quellend wirkenden Tonsorte, insbesondere einem Bentonit, besteht oder eine solche aufweist, zu 0,5 - 0,7 bis 6 - 7 %, vorzugsweise zu 1 bis 6 - 7 %, auf wiederum bevorzugte Weise zu 1 bis 5 %, bevorzugt zu ungefähr 2, 3 und 4 %, oder besser noch zu 2 Massen-% des Trockengewichts des zu granulierenden Materials, ein Rührvorgang mit hoher Geschwindigkeit erfolgt, woraufhin ein Durchgang durch zwei Verdichtungswalzen erfolgt, um eine durchgehende Platte zu bilden, nämlich eine Art "Band" mit einer Dicke von 2 bis 3 mm, welches anschließend zerbrochen wird, um mehreckige Granulatkörner zu bilden, die im Anschluss mechanisch abgerundet und gesiebt werden, um das fertige Granulatprodukt zu erhalten, welches die Form mehr oder weniger regelmäßiger Mehrecke hat.

8. Verfahren nach Anspruch 7, **dadurch gekennzeichnet, dass** es sich bei dem mineralischen Carbonat um natürliches Calciumcarbonat oder gefälltes Calciumcarbonat (PCC) handelt.

9. Verfahren nach Anspruch 7 oder 8, **dadurch gekennzeichnet, dass** das Calciumcarbonat vollständig oder teilweise durch einen oder andere Mineralstoffe, wie etwa Dolomite, ersetzt wird, oder es vollständig oder teilweise durch einen oder andere Mineralstoffe wie etwa natürliche Phosphate in Mischung mit dem Bodenverbesserer, ammoniakalische Stickstoffdüngemittel oder andere düngend wirkende Stoffe oder deren Mischungen ersetzt wird.

10. Anwendung der Bodenverbesserer nach Anspruch 9 auf dem Gebiet der düngend wirkenden Stoffe, insbesondere der Bodenverbesserer und der Düngemittel, die in sämtlichen Bereichen der Landwirtschaft im Allgemeinen von Nutzen sind, wie etwa im Anbau von Getreide und Futtermitteln, im mechanisierten Großflächenanbau, im Anbau von Ölsaaten, von proteinreichen Saaten sowie in den verwandten Bereichen, wie etwa in der Forstwirtschaft, im Anbau von Bäumen im Allgemeinen, in Baumschulen, in der Erzeugung von Gemüse und Hülsenfrüchten, oder in beliebigen anderen Arten von Landwirtschaft, wozu unter anderem Weideflächen, der Anbau von Biomasse zur Energieerzeugung, der Anbau von Pflanzendecken zu Zwecken des Umweltschutzes, sowie Verwendungen im Wohn- und Freizeitbereich auf Rasenflächen oder grasbewachsenen Grundstücken gehören.

## Claims

1. A notably basic mineral enriching agent containing, as a base, a mineral carbonate **characterised in that** it is compacted before spreading and **in that** it contains at least one "dynamic disintegration" agent, capable of causing in the granule bursting, a great fragmentation, a dispersal, or a great "dispersal", i.e. implying a force within and/or on the surface of the granule, tending to cause the granule to burst or "explode" when the said granule is in contact with water and/or moisture, and notably with the ground, and more specifically the ground water or moisture, and **characterised in that** the said dynamic disintegration agent is incorporated in the range of 0.5 - 0.7 to 6 - 7% by dry weight mass of the material to be granulated of the said moderately swelling product or of the said swelling clay in the granule, preferably 1 to 6 - 7%, and even more preferably 1 to 5%, preferentially around 2, 3 and 4%, or better still 2%, by dry weight mass and is chosen from among the weak acids such as formic or citric acid or, less preferentially, phosphoric acid, or an anionic super-absorbent polymer of cross-linked copolymer of acrylamide and potassium acrylate types, which are not water-soluble or consists of, or contains, a moderately swelling product chosen from moderately swelling clays.

2. The mineral enriching agent according to claim 1, **characterised in that** the said mineral carbonate is natural or precipitated calcium carbonate (PCC).

3. The mineral enriching agent according to claim 2, **characterised in that** the said calcium carbonate is wholly or partly replaced by one or more other minerals such as dolomites, or is wholly or partly replaced by one or more other minerals such as natural phosphates blended with the enriching agent, ammonia nitrogenous fertilisers or other fertilisers, or mixtures thereof.

4. The mineral enriching agent according to any one of claims 1 to 3, **characterised in that** the said moderately swelling clay is a bentonite.

5. The mineral enriching agent according to any one of claims 1 to 4, **characterised in that** the said moderately swelling clays, notably a bentonite, is incorporated in the range of 0.5 - 0.7 to 6 - 7%, preferably 1 to 6 - 7%, and even more preferably 1 to 5%, preferentially around 2, 3 and 4%, or better still 2%, by dry weight mass of the material to be granulated.

6. The mineral enriching agent according to claim 4 or 5, **characterised in that** the said bentonite is a clay belonging to the family of smectites, with the appearance of a light powder, with a 14% maximum water content, with a 30% maximum overtail with a 75-micron sieve (dry testing) and a specific weight of 2.3 g/cm³.

7. A method for manufacturing the granulated enriching agent with dynamic disintegration according to any one of claims 1 to 6, **characterised in that** a conventional granulation is accomplished but comprises a compacting step by addition and incorporation of molasses, and dry blending of the enriching agent and of the dynamic disintegration agent which is chosen among the weak acids such as formic or citric acid or, less preferentially, phosphoric acid, or an anionic super-absorbent polymer of cross-linked copolymer of acrylamide and potassium acrylate types, which are not water-soluble or consists of, or contains, a moderately swelling product chosen from moderately swelling clays, and consists of, or contains a moderately swelling clay, notably a bentonite, in the range of 0.5 - 0.7 to 6 - 7%, preferably 1 to 6 - 7%, even more preferably 1 to 5%, preferentially around 2, 3 and 4%, and better still 2%, by dry weight mass of the material to be granulated, and high-speed stirring, followed by passing between two compacting rollers to form a continuous plate, a sort of "carpet" of approximately 2 to 3 mm thick, which is then broken up to form polygonal granules which will then be eroded and screened before constituting the definitive granule, in the form of more or less regular polygons.

8. The process according to claim 7, **characterised in that** the said mineral carbonate is natural or precipitated calcium carbonate (PCC).

9. The process according to claim 7 or 8, **characterised in that** the calcium carbonate is wholly or partly replaced by one or more other minerals such as dolomites, or is wholly or partly replaced by one or more other minerals such as natural phosphates blended with the enriching agent, ammonia nitrogenous fertilisers or other fertilisers, or mixtures thereof.

10. Application of the enriching agents according to claim 9 in the sectors of fertilising materials, more specifically enriching agents and fertilisers of use in all fields of agriculture in general, such as cereal and fodder agriculture, large crops, oil crops, protein crops, up to and including all related fields, such as forestry, forest crops in general, nurseries, production of vegetables and leguminous plants, and all other types of agriculture, including meadows, biomass crops intended for energy generation, plant cover crops for environmental purposes and domestic or leisure uses on turf or planted terrain.
